# EUROPEAN PATENT APPLICATION

(11) **EP 2 333 592 A2**
(43) Date of publication of application: **15.06.2011**
(21) Application number: 10014623.2
(22) Date of filing: 15.11.2010
(51) Int. Cl.: G02B 6/00

(54) **Backlight unit and display device using same**

(30) Priority: 25.11.2009 JP 2009267986
(71) Applicant: Panasonic Electric Works Sunx Co, Ltd., Kasugai Aichi (JP)
(72) Inventor: Osumi, Sachi, Kasugai, Aichi (JP); Uematu, Eiiti, Kasugai, Aichi (JP); Doi, Kenji, Kasugai, Aichi (JP); Katsuya, Hiroki, Kasugai, Aichi (JP)
(74) Representative: Samson & Partner

(57) **Abstract**

A backlight unit arranged at the rear side of a liquid crystal panel (12) for illuminating the liquid crystal panel. The backlight unit includes a light source (15a) for emitting light and a light guide plate (13). The light guide plate includes a light incident surface (13f) on which the light emitted from the light source is incident, a main reflection surface (13c) for internally reflecting the light incident on the light incident surface and a light launching surface from which the light reflected by the main reflection surface is launched toward the liquid crystal panel. The backlight unit further includes a frame (14) for supporting the light guide plate and a substrate (15) arranged at the opposite side of the frame from the liquid crystal panel and mounted with electronic parts. The light source is mounted to the substrate.

## Description

### Field of the Invention

The present invention relates to a backlight unit for irradiating light from a light source on the rear surface of a liquid crystal panel through a light guide plate, and a display device using the same.

### Background of the Invention

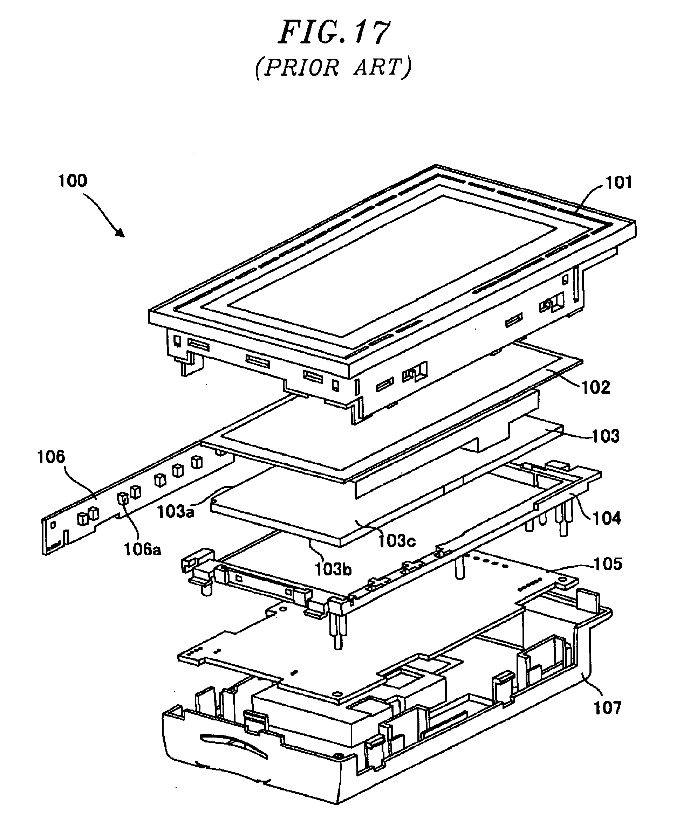

A conventional display device 100 shown in Fig. 17 is used as a display device in, e.g., a programmable logic controller (PLC) for controlling a production line or the like. The display device 100 is formed into a substantially box-like shape by means of a front housing part 101 and a rear housing part 107. Accommodated within the display device 100 are a liquid crystal panel 102, a light guide plate 103, a frame 104, a circuit board 105 and a support substrate 106. The light guide plate 103 has a flat shape with a specified thickness and is supported by the frame 104. Integrated circuits for performing communication or arithmetic processing or other electronic parts are mounted on the circuit board 105. The circuit board 105 is arranged between the frame 104 and the rear housing part 107 in a parallel or substantially parallel relationship with the liquid crystal panel 102.

A plurality of LEDs (light emitting diodes) 106a serving as a light source is installed side by side on the support substrate 106 in a regular or irregular interval. The support substrate 106 is attached in place so that the optical axes of the LEDs 106a can extend along the thickness direction of the support substrate 106. The support substrate 106 is arranged in a substantially orthogonal relationship with the circuit board 105 so that the light emitting from the LEDs 106a can be incident upon the light entering portion 103a provided on one end surface of the light guide plate 103.

In the display device 100, therefore, the light emitting from the LEDs 106a is incident upon the light entering portion 103a of the light guide plate 103, diffused and reflected by the rear surface 103b of the light guide plate 103 and then launched from the front surface 103c of the light guide plate 103, thereby illuminating the liquid crystal panel 102 from the rear surface thereof. At this time, the light is further diffused as it passes through a diffusion sheet closely attached to the liquid crystal panel 102. Thus, the entire area of the liquid crystal panel 102 is illuminated at a substantially uniform brightness (see, e.g., Japanese Patent Application Publication No. 2004-325959, Fig. 1 and paragraph 0013)

In the conventional display device 100 mentioned above, however, the circuit board 105 mounted with the integrated circuits or the electronic parts is separate from the support substrate 106 mounted with the LEDs 106a. When assembling the conventional display device 100, it is necessary to attach the circuit board 105, the frame 104, the light guide plate 103, the support substrate 106, the liquid crystal panel 102 and the like to the rear housing part 107 one after another with care take to the mutual interference thereof. This poses a problem in that the assembling process becomes cumbersome, thereby making it difficult to reduce the cost involved in the assembling process.

Since the circuit board 105 and the support substrate 106 are separate from each other, the number of parts is increased in the conventional display device 100. This makes it hard to reduce the cost involved in manufacturing the parts. Moreover, the conventional display device 100 needs separate support structures, e.g., ribs and screw holes, in order to attach the circuit board 105 and the support substrate 106 to the rear housing part 107. This makes it hard to reduce the overall shape.

### Summary of the Invention

In view of the above, the present invention provides a backlight unit capable of reducing the manufacturing cost while realizing improved assembling convenience and increased space saving, and a display device using the same.

In accordance with an aspect of the present invention, there is provided a backlight unit arranged at the rear side of a liquid crystal panel for illuminating the liquid crystal panel, including: a light source for emitting light; a light guide plate including a light incident surface on which the light emitted from the light source is incident, a main reflection surface for internally reflecting the light incident on the light incident surface and a light launching surface from which the light reflected by the main reflection surface is launched toward the liquid crystal panel; a frame for supporting the light guide plate; and a substrate arranged at the opposite side of the frame from the liquid crystal panel and mounted with electronic parts, the light source being mounted to the substrate.

The light source may be oriented so that the optical axis thereof can extend in the thickness direction of the substrate or in the direction parallel to the plane of the substrate.

With this configuration, the light source is mounted on the substrate together with electronic parts. Accordingly, there is no need to separately prepare a circuit board which would be needed in the prior art to mount a light source. As compared with the prior art, it is therefore possible to simplify the assembling process and to reduce the number of parts. In case where the backlight unit is employed in a display device, it is possible to reduce the size of the display device as compared with the prior art. Thus, it is possible to accomplish the objects mentioned above.

The light source may be oriented so that the optical axis thereof extends in the thickness direction of the substrate, the light guide plate including an auxiliary reflection surface for reflecting the light incident on the light incident surface toward the main reflection surface.

With this configuration, the light source is oriented so that the optical axis thereof extends in the thickness direction of the substrate. Therefore, it is possible to arrange the light source between the light guide plate and the substrate. In other words, there is no need to provide a space near the end surface of the light guide plate as in the case where the light source is arranged on the end surface of the light guide plate. Accordingly, it is possible to reduce the size of the light guide plate as compared with the case where the light source is arranged on the end surface of the light guide plate.

The backlight unit may further include a reflection member provided outside the main reflection surface.

In this regard, examples of the reflection member include a bonding structure of a resin-made or metal-made sheet, a vapor deposition structure of a metal foil and a structure in which a separate member is brought into close contact with the outer surface of the main reflection surface.

With this configuration, the reflection member is provided outside the main reflection surface. Therefore, the light penetrating the main reflection surface is reflected into the light guide plate by the reflection member. Accordingly, the light emitted from the light source is reliably launched from the launching surface of the light guide plate through the main reflection surface. This helps prevent occurrence of brightness reduction.

The frame may include a covering portion for covering the main reflection surface, the covering portion provided with a frame reflection layer serving as a covering surface for reflecting the light toward the main reflection surface.

In this regard, it does not matter whether the covering surface is in contact with the outer surface of the main reflection surface. Examples of the frame reflection layer include a bonding structure of a resin-made or metal-made sheet, a vapor deposition structure of a metal foil, a structure in which a separate member is brought into close contact with the outer surface of the main reflection surface 13c, and a frame structure formed of a material with desired surface reflectivity.

With this configuration, the frame reflection layer is provided on the covering surface. Therefore, the light penetrating the main reflection surface is reflected into the light guide plate by the frame reflection layer. Accordingly, the light emitted from the light source is reliably launched from the launching surface of the light guide plate through the main reflection surface. This helps prevent occurrence of brightness reduction.

The frame may be arranged to support the liquid crystal panel. Therefore, there is no need to provide an additional member for supporting the liquid crystal panel. This makes it possible to further reduce the number of component parts.

The frame may include a surrounding member arranged between the substrate and the frame to surround the light source, the surrounding member having a transmission hole for passing the light emitted from the light source. The frame may include a surrounding portion for surrounding the light source, the surrounding portion having a transmission hole for passing the light emitted from the light source.

With this configuration, the light emitted from the light source in other directions than the light incident surface is reflected toward the light incident surface by the surrounding member or the surrounding portion. This makes it possible to realize high brightness.

The substrate may include a substrate reflection layer provided around the light source. Therefore, the light emitted toward the substrate is reflected by the substrate reflection layer to go toward the light incident surface. This makes it possible to realize high brightness.

The light source may be kept in close contact with the light incident surface. Thus, the light emitted from the light source goes toward the light incident surface with no waste.

The light source may be oriented so that the optical axis thereof extends in the direction parallel to the plane of the substrate. This eliminates the need to specially redesign the light guide plate, which makes it possible to employ a conventional light guide plate.

In accordance with another aspect of the present invention, there is provided a display device including the backlight unit mentioned above. Therefore, it is possible to simplify the assembling process and to reduce the number of parts as compared with the prior art. In case where the display device is employed in, e.g., a PLC, it is possible to reduce the size of the display device as compared with the prior art.

With the backlight unit of the present invention and the display device using the same, it is possible to reduce the manufacturing cost while realizing improved assembling convenience and increased space saving.

### Brief Description of the Drawings

The objects and features of the present invention will become apparent from the following description of embodiments, given in conjunction with the accompanying drawings, in which:
Fig. 1 is a perspective view showing the overall structure of a display device according to a first embodiment of the present invention;
Fig. 2 is an exploded perspective view showing the structure of a backlight unit employed in the display device of the first embodiment;
Fig. 3 is a perspective view showing a light guide plate, in which a reflection sheet is bonded to a reflection portion, and a liquid crystal panel;
Fig. 4 is a section view of the light guide plate having the reflection sheet bonded to the reflection portion;
Fig. 5 is a perspective view showing the light guide plate, in which a reflection member is attached to the reflection portion, and the liquid crystal panel;
Fig. 6 is a section view of the light guide plate having the reflection member attached to the reflection portion;
Fig. 7 is a perspective view showing a frame provided with a reflection portion for reflecting the light passing through the light guide plate;
Fig. 8 is a section view of the frame provided with the reflection portion;
Fig. 9 is a perspective view showing a frame provided with a fixing portion for fixing the liquid crystal panel;
Fig. 10 is a rear perspective view showing a reflection member arranged between the substrate and the frame for reflecting the light emitted from LEDs;
Fig. 11 is a section view of the frame to which the reflection member for reflecting the light emitted from LEDs is attached;
Fig. 12 is a perspective view showing a frame provided with a reflection member for reflecting the light emitted from LEDs;
Fig. 13 is a section view of the frame provided with the reflection member for reflecting the light emitted from LEDs;
Fig. 14 is a perspective view showing a substrate provided with reflection members around LEDs and a frame;
Fig. 15 is a section view showing one example of the combination of the liquid crystal panel, the light guide plate, the frame and the substrate;
Fig. 16 is a section view showing another example of the combination of the liquid crystal panel, the light guide plate, the frame and the substrate; and
Fig. 17 is an exploded perspective view showing the
structure of a backlight unit employed in a conventional display device.

### Detailed Description of the Preferred Embodiments

Embodiments of the present invention will be described with reference to the accompanying drawings which form a part hereof.

### (First Embodiment)

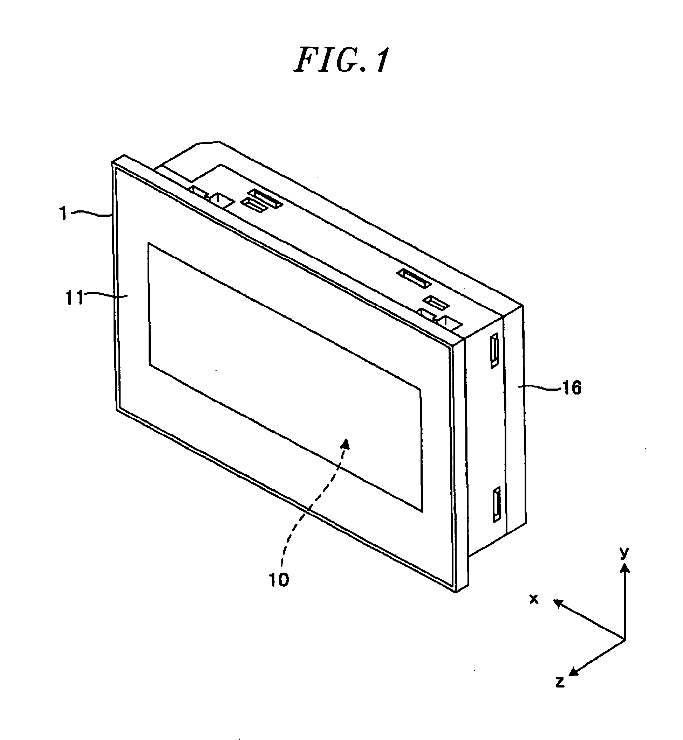

Fig. 1 is a perspective view showing the overall structure of a display device 1 according to a first embodiment of the present invention. In the following description, the longitudinal direction extending along the plane of the display device 1 in Fig. 1 will be referred to as "x-direction", the direction parallel to the plane of the display device 1 and orthogonal to the x-direction as "y-direction", and the direction orthogonal to both the x-direction and the y-direction and extending in the thickness direction of the display device 1 as "z-direction". In the display device 1 of the first embodiment shown in Fig. 1, the positive side in the z-direction will be called "front".

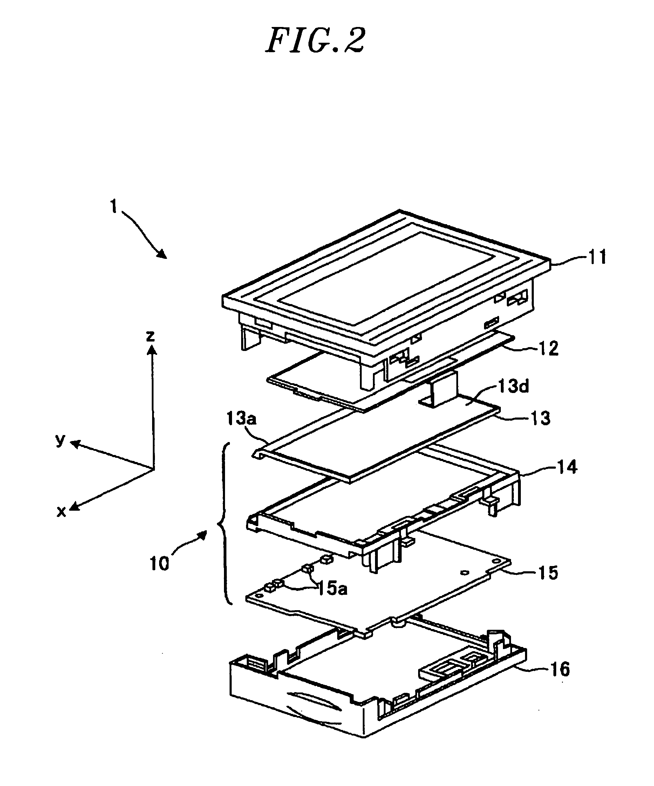

The display device 1 of the first embodiment as exploded will be described with reference to Fig. 2, which is an exploded perspective view showing the structure of a backlight unit 10 employed in the display device 1 of the first embodiment. As shown in Fig. 1, the display device 1 is formed into a substantially box-like shape by means of a front housing part 11 and a rear housing part 16. Accommodated within the display device 1 are a liquid crystal panel 12, a light guide plate 13, a frame 14 and a substrate 15. More specifically, the substrate 15 is attached to the z-direction positive side (upper side) of the rear housing part 16. The frame 14 is attached to the z-direction positive side (upper side) of the substrate 15. The light guide plate 13 is attached to the z-direction positive side (upper side) of the frame 14. The liquid crystal panel 12 is attached to the z-direction positive side (upper side) of the light guide plate 13. The front housing part 11 of the display device 1 is attached to the z-direction positive side (upper side) of the liquid crystal panel 12, thereby completing the display device 1 of the first embodiment.

The backlight unit 10 employed in the display device 1 of the first embodiment is e.g., an edge light type including the light guide plate 13, the frame 14 and the substrate 15. In the display device 1 of the first embodiment, the liquid crystal panel 12 is mounted on the light emitting surface of the backlight unit 10. Next, description will be made on the respective components making up the display device 1 of the first embodiment.

The front housing part 11 makes up the housing of the display device 1 of the first embodiment. The liquid crystal panel 12 includes a liquid crystal cell, in which a liquid crystal material is interposed between two glass substrates provided with transparent electrode films, and two polarizing plates arranged on the upper and lower surfaces of the liquid crystal cell. The content displayed on the liquid crystal panel 12 is illuminated by the light coming from the backlight unit of the display device 1 of the first embodiment so that a user can see the displayed content with ease.

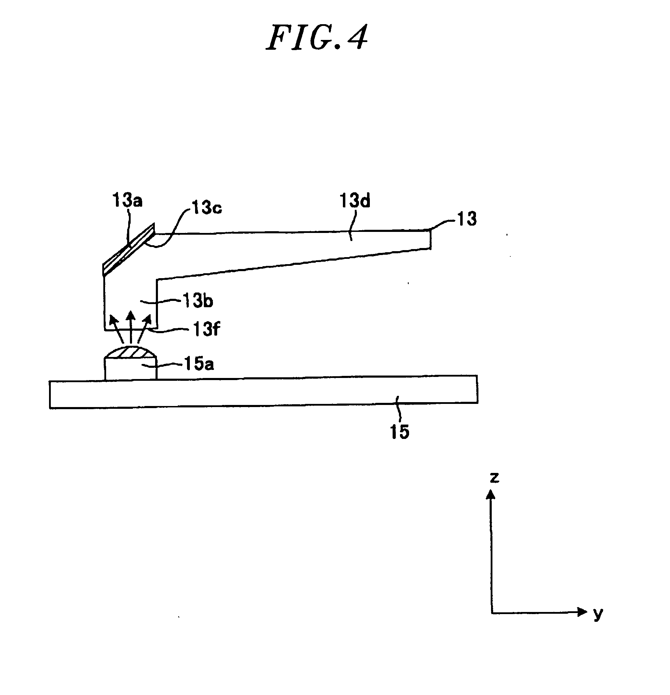

The light guide plate 13 is made of, e.g., a light-transmitting synthetic resin or a transparent acrylic material. As shown in Fig. 4, the light guide plate 13 includes an incident portion 13b on which the light emitted from the LEDs 15a as a light source is incident through a light incident surface 13f, a main reflection surface 13c for internally reflecting the light incident on the incident portion 13b in the direction parallel to the plane of the light guide plate 13 and orthogonal to the longitudinal direction of the light guide plate 13 (namely, toward the y-direction negative side in Fig. 2), and an irradiation portion 13d for making uniform the light reflected by the main reflection surface 13c and irradiating the light on the liquid crystal panel 12. In order to make uniform the reflected light, it is desirable that an optical sheet, e.g., a diffusion sheet, for diffusing the light reflected by the main reflection surface 13c of the light guide plate 13 be arranged on the surface of the light guide plate 13. It is also desirable that a reflection sheet (not shown), by which the light reflected toward the rear side (the z-direction negative side in Fig. 2) within the light guide plate 13 is reflected toward the front side (the z-direction positive side in Fig. 2), be arranged on the rear surface of the light guide plate 13. The irradiation portion 13d (see Fig. 4) of the light guide plate 13 has substantially the same area as that of the liquid crystal panel 12 and has a rectangular plate shape with a substantially uniform thickness. The incident portion 13b (see Fig. 4) of the light guide plate 13 is formed to protrude from one end of the irradiation portion 13d.

The frame 14 is formed into a substantially rectangular box shape opened at the front surface (the y-direction positive side in Fig. 2) and at the side surface corresponding to the incident portion 13b (see Fig. 4) of the light guide plate 13. The light guide plate 13 is accommodated within and supported by the frame 14. The light emitted from the LEDs 15a as a light source is guided toward the light incident surface 13f (see Fig. 4) of the light guide plate 13 by the frame 14. The inner surface of the frame 14 making contact with the light guide plate 13 may be subjected to e.g., mirror treatment so that the reflectivity thereof can be increased.

The substrate 15 is arranged on the opposite side of the frame 14 from the liquid crystal panel 12. The LEDs 15a for emitting light toward the light incident surface 13f (see Fig. 4) of the light guide plate 13 through the frame 14 are mounted to the substrate 15 substantially along a line extending in the longitudinal direction of the light incident surface 13f of the light guide plate 13. In this regard, the LEDs 15a serve as a light source. Also mounted to the substrate 15 are integrated circuits for performing communication or arithmetic processing or electronic parts. The substrate 15 controls the electric power supplied to the LEDs 15a and the display operation of the liquid crystal panel 12. Since the LEDs 15a are arranged and mounted on the single substrate 15 of large size, there is provided an advantageous effect in that the heat generated by the light emission of the LEDs 15a is dissipated in an effective manner. The rear housing part 16 makes up the housing of the display device 1 of the first embodiment. The components of the display device 1 of the first embodiment have the configurations as described above.

The operation of the backlight unit 10 will now be described in detail. The LEDs 15a are arranged and mounted in a regular or irregular interval substantially along a line extending in the longitudinal direction of the incident portion 13b (see Fig. 4) of the light guide plate 13 so that the axis of the light emitted from each of the LEDs 15a can extend in the thickness direction of the substrate 15. The arrangement interval of the LEDs 15a depends on the desired brightness distribution. The light emitted from the LEDs 15a is guided toward the light guide plate 13 through the frame 14. The light thus guided is incident on the incident portion 13b (see Fig. 4) of the light guide plate 13. The light arriving at the incident portion 13b (see Fig. 4) of the light guide plate 13 is incident on and reflected by the main reflection surface 13c (see Fig. 4) of the light guide plate 13. The light thus reflected travels toward the irradiation portion 13d (see Fig. 4) of the light guide plate 13 and propagates through the light guide plate 13. The light propagating through the light guide plate 13 becomes a planar light source in the irradiation portion 13d of the light guide plate 13 and illuminates the liquid crystal panel 12 from the rear side thereof.

In the display device 1 of the first embodiment, the light source may be mounted to the surface of the substrate 15 opposing to the frame 14. In addition, the light source may be oriented so that the optical axis thereof can extend along the thickness direction of the substrate 15 or parallel to the plane of the substrate 15.

With the display device 1 of the first embodiment, the light source is mounted to the substrate 15 together with other electronic parts. Accordingly, there is no need to separately prepare a circuit board which would be needed in the prior art to mount a light source. As compared with the prior art, it is possible to simplify the assembling process and to reduce the number of parts. This makes it possible to reduce the size of the display device as compared with the prior art.

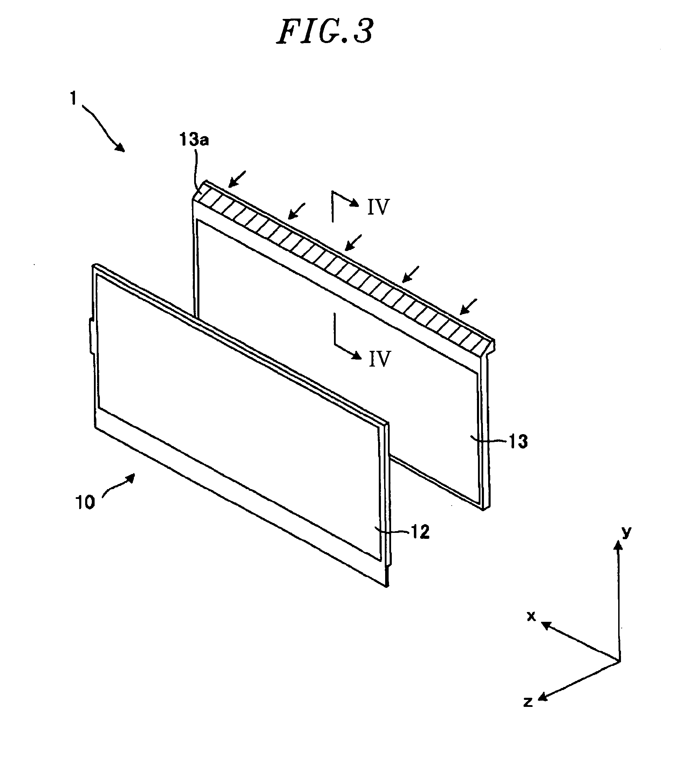

Additionally, a reflection sheet 13a as an auxiliary reflection surface for reflecting the light incident through the light incident surface 13f of the light guide plate 13 toward the main reflection surface 13c may be bonded to the outer surface of the light guide plate 13. The bonding structure of the reflection sheet 13a will be described with reference to Figs. 3 and 4. Fig. 3 is a perspective view showing the light guide plate 13, in which the reflection sheet 13a is bonded to the outer surface thereof to cover the main reflection surface 13c, and the liquid crystal panel 12. Fig. 4 is a section view taken along line IV-IV in Fig. 3, showing the light guide plate 13 in which the reflection sheet 13a is bonded to the outer surface thereof to cover the main reflection surface 13c. For the sake of convenience in description, one of the LEDs 15a mounted to the substrate 15 is also shown in Fig. 4.

Referring to Fig. 4, if the LEDs 15a arranged and mounted on the substrate 15 emit light, the light thus emitted is incident on the incident portion 13b of the light guide plate 13 through the frame 14 (not shown in Fig. 4) and the light incident surface 13f of the light guide plate 13. The light incident on the incident portion 13b of the light guide plate 13 is reflected by the main reflection surface 13c of the light guide plate 13, thus traveling toward the irradiation portion 13d of the light guide plate 13. The irradiation portion 13d of the light guide plate 13 makes the light uniform and illuminates the liquid crystal panel 12 from the rear side thereof. However, there is a possibility that the light incident on the main reflection surface 13c is not fully reflected but may partially transmit the main reflection surface 13c. For this reason, the reflection sheet 13a is bonded to the outer surface of the light guide plate 13 so that it can cover the main reflection surface 13c of the light guide plate 13 to reflect the light penetrating the main reflection surface 13c. Preferably, the reflection sheet 13a is made of a highly reflective material. Use of the reflection sheet 13a improves the reflectivity of the main reflection surface 13c of the light guide plate 13. Thus, the light emitted from the LEDs 15a as a light source is well irradiated on the liquid crystal panel 12, consequently enhancing the backlight brightness in the backlight unit 10.

As set forth above, use of the reflection sheet 13a as an auxiliary reflection surface makes it possible to orient the light source so that the axis of the light source can extend in the thickness direction of the substrate 15. Therefore, it is possible to arrange the light source between the light guide plate 13 and the substrate 15. In other words, there is no need to provide a space near the end surface of the light guide plate 13 as in the case where the light source is arranged on the end surface of the light guide plate 13. Accordingly, it is possible to reduce the size of the light guide plate 13 as compared with the case where the light source is arranged on the end surface of the light guide plate 13.

Additionally, a reflection member 13e for reflecting the light, which comes from the light incident surface 13f of the light guide plate 13 and passes through the main reflection surface 13c, toward the main reflection surface 13c may be attached to the outer surface of the light guide plate 13 so that it can cover the main reflection surface 13c of the light guide plate 13. Examples of the reflection member 13e include a bonding structure of a resin-made or metal-made sheet, a vapor deposition structure of a metal foil and a structure in which a separate member is brought into close contact with the outer surface of the main reflection surface 13c.

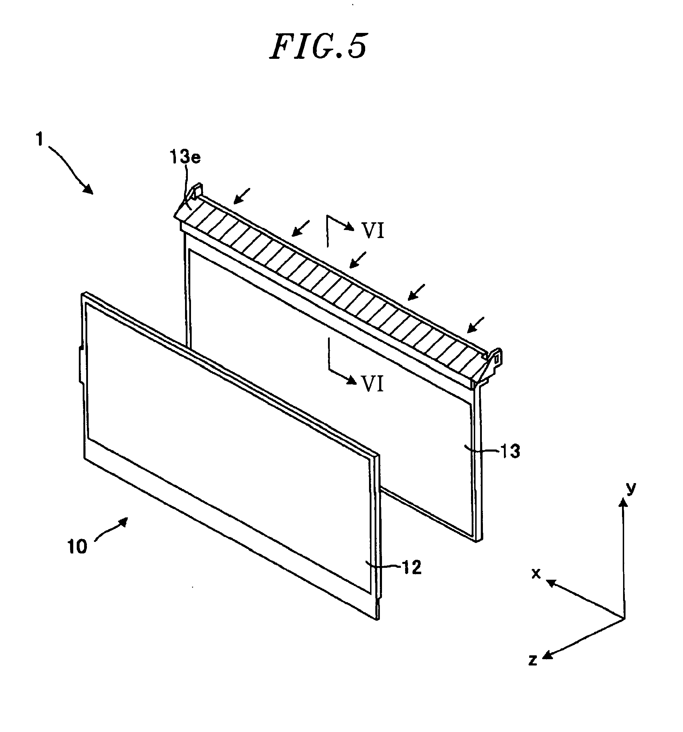

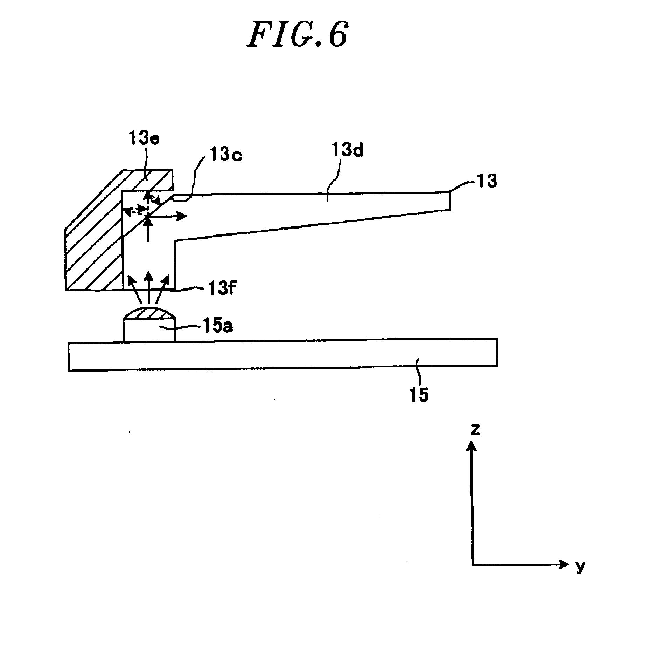

The attachment structure of the reflection member 13e will be described with reference to Figs. 5 and 6.

Fig. 5 is a perspective view showing the light guide plate 13, to which the reflection member 13e is attached to cover the main reflection surface 13c of the light guide plate 13, and the liquid crystal panel 12. Fig. 6 is a section view taken along line VI-VI in Fig. 5, showing the light guide plate 13 to which the reflection member 13e is attached to cover the main reflection surface 13c of the light guide plate 13. For the sake of convenience in description, one of the LEDs 15a arranged and mounted on the substrate 15 is illustrated in Fig. 6.

Referring to Fig. 6, if the LEDs 15a arranged and mounted on the substrate 15 emit light, the light thus emitted is incident on the incident portion 13b of the light guide plate 13 through the frame 14 (not shown in Fig. 6) and the light incident surface 13f of the light guide plate 13. The light incident on the incident portion 13b of the light guide plate 13 is reflected by the main reflection surface 13c of the light guide plate 13, thus traveling toward the irradiation portion 13d of the light guide plate 13. The irradiation portion 13d of the light guide plate 13 makes the light uniform and illuminates the liquid crystal panel 12 from the rear side thereof. However, there is a possibility that the light incident on the main reflection surface 13c is not fully reflected but may partially transmit the main reflection surface 13c. For this reason, the reflection member 13e is attached to the outer surface of the light guide plate 13 so that it can cover the main reflection surface 13c of the light guide plate 13 to reflect the light penetrating the main reflection surface 13c. Preferably, the reflection member 13e is made of a highly reflective material. Use of the reflection member 13e improves the reflectivity of the main reflection surface 13c of the light guide plate 13. Thus, the light emitted from the LEDs 15a is well irradiated on the liquid crystal panel 12, consequently enhancing the backlight brightness in the backlight unit 10.

As set forth above, use of the reflection member 13e as an auxiliary reflection surface makes it possible to provide the reflection member 13e outside the main reflection surface 13c. Therefore, the light penetrating the main reflection surface 13c is reflected into the light guide plate 13 by the reflection member 13e. Accordingly, the light emitted from the light source is reliably launched from the launching surface of the light guide plate 13 through the main reflection surface 13c. This helps prevent occurrence of brightness reduction.

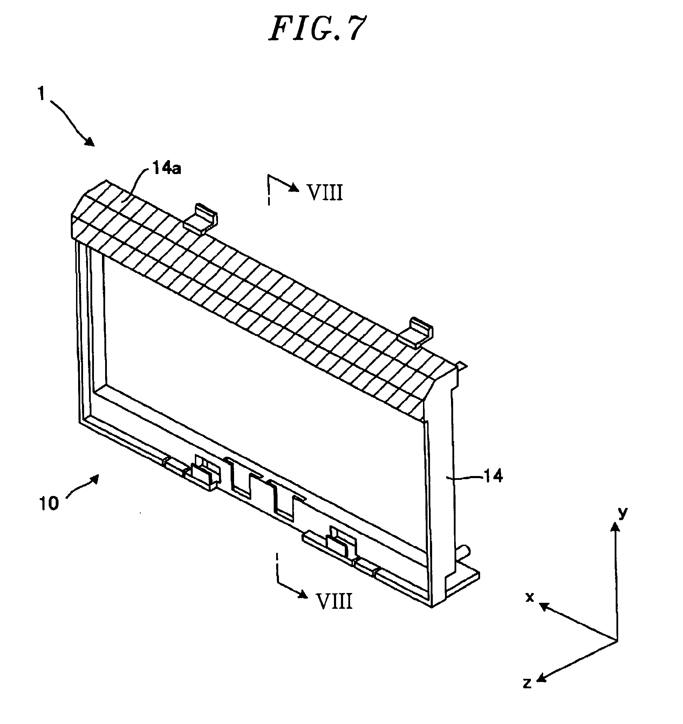

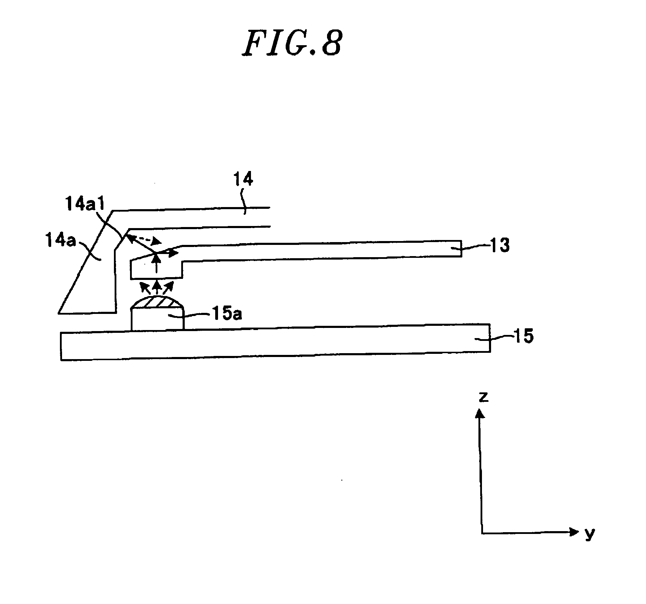

Instead of attaching the reflection member 13e so as to cover the main reflection surface 13c of the light guide plate 13 as shown in Fig. 5, a covering portion 14a for covering the main reflection surface 13c may be provided in the frame 14 as illustrated in Fig. 7. The covering portion 14a may include a reflection portion 14a1 (see Fig. 8) that serves as a covering surface for reflecting the light toward the main reflection surface 13c. The reflection portion 14a1 makes up a reflection layer in the covering portion 14a of the frame 14. Fig. 8 is a section view of the frame 14 taken along line VIII-VIII in Fig. 7. In this regard, it does not matter whether the covering surface is in contact with the outer surface of the main reflection surface 13c. Examples of the reflection layer of the frame 14 include a bonding structure of a resin-made or metal-made sheet, a vapor deposition structure of a metal foil, a structure in which a separate member is brought into close contact with the outer surface of the main reflection surface 13c, and a frame structure formed of a material with desired surface reflectivity.

As set forth above, the reflection portion 14a1 of the covering portion 14a of the frame 14 provides a frame reflection layer on the covering surface. Therefore, the light penetrating the main reflection surface 13c is reflected into the light guide plate 13 by the frame reflection layer. Accordingly, the light emitted from the light source is reliably launched from the launching surface of the light guide plate 13 through the main reflection surface 13c. This helps prevent occurrence of brightness reduction.

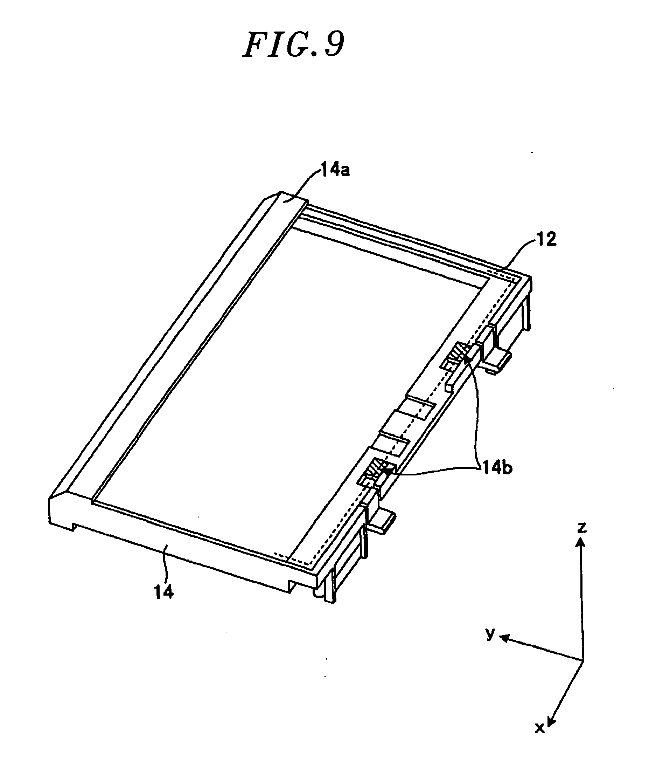

As shown in Fig. 9, the frame 14 may include a fixing portion 14b for fixing the liquid crystal panel 12 in place. Fig. 9 is a perspective view showing the frame 14 provided with the fixing portion 14b for fixing the liquid crystal panel 12 in place. A part of the liquid crystal panel 12 is illustrated by a dot line in Fig. 9. The liquid crystal panel 12 is fixed in place by the covering portion 14a and the fixing portion 14b of the frame 14. In this case, the frame 14 plays a role of supporting and fixing the liquid crystal panel 12. There is no need to provide other members than the frame 14 to fix the liquid crystal panel 12. This provides an advantageous effect in that it is possible to reduce the number of parts required in manufacturing the display device 1 of the first embodiment, thereby further reducing the component parts of the display device 1.

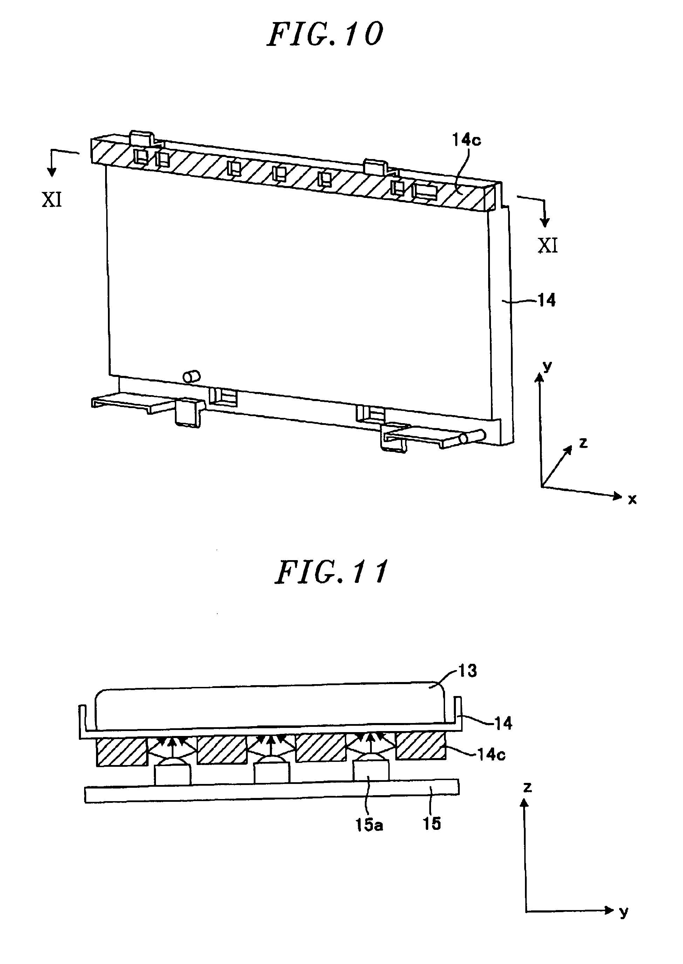

As shown in Fig. 10, the frame 14 may include a surrounding member 14c arranged between the substrate 15 and the frame 14. The surrounding member 14c has transmission holes for passing the light emitted from the light source and surrounds the light source. The surrounding member 14c is made of a material having reflectivity substantially equal to or greater than that of the substrate 15. Fig. 10 is a rear perspective view showing the surrounding member 14c attached between the substrate 15 and the frame 14 to surround the LEDs 15a as a light source. Fig. 11 is a section view taken along line XI-XI in Fig. 10, showing the relationship between the surrounding member 14c for reflecting the light emitted from the LEDs 15a, the frame 14, the LEDs 15a arranged and mounted on the substrate 15 and the light guide plate 13.

Since the LEDs 15a arranged and mounted on the substrate 15 is covered by the surrounding member 14c, the light emitted from the light source in other directions than the light incident surface is reflected toward the light incident surface by the surrounding member 14c or the surrounding portion. This makes it possible to realize high brightness. The light guide plate 13, the frame 14 and the substrate 15 are actually kept in close contact with each other, although they are separated from each other in the drawings.

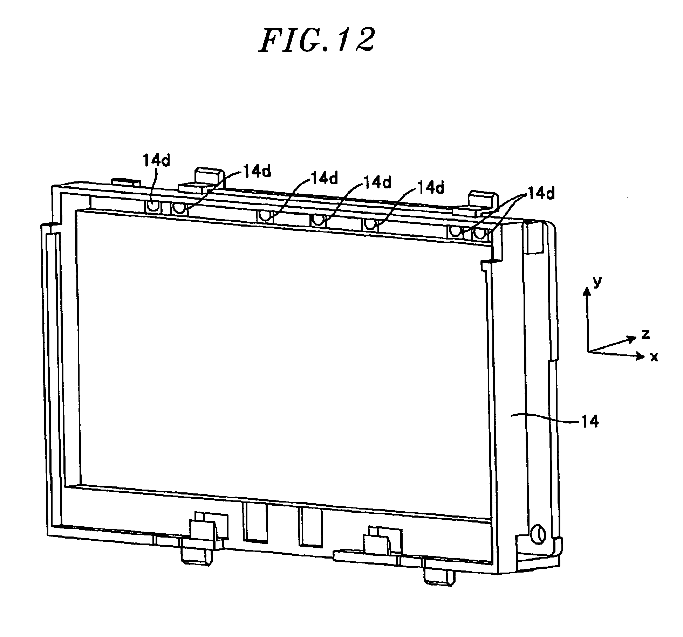

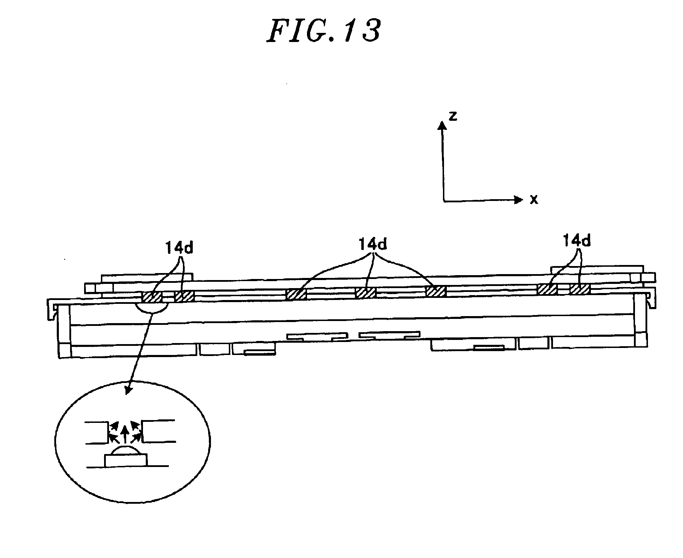

Instead of attaching the surrounding member 14c between the frame 14 and the substrate 15 as shown in Fig. 10, the frame 14 may be made of a material having reflectivity substantially equal to or greater than that of the substrate 15 and may include surrounding portions 14d for surrounding the light source as shown in Fig. 12, each of the surrounding portions 14d having a transmission hole for passing the light emitted from the LEDs 15a. Fig. 13 is a section view of the frame 14 taken along the z-x plane in Fig. 12.

Since the surrounding portions 14d of the frame 14 provides a substrate reflection layer around the light source in the substrate 15, the light emitted toward the substrate 15 is reflected by the substrate reflection layer to go toward the light incident surface. This makes it possible to realize high brightness.

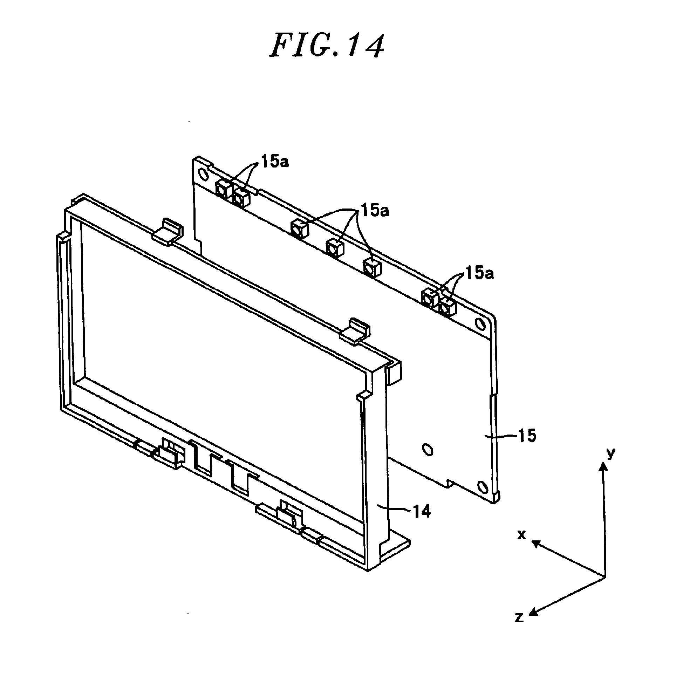

As shown in Fig. 14, a substrate reflection layer for reflecting the lights emitted from the LEDs 15a may be provided around the LEDs 15a arranged and mounted on the substrate 15. Fig. 14 is a perspective view showing the substrate 15, in which reflection devisal is applied around the LEDs 15a, and the frame 14. Examples of the method for forming the substrate reflection layer include applying white silk to the area around the LEDs 15a, applying white resist to the area around the LEDs 15a, bonding a dedicated reflective sheet to the area around the LEDs 15a and providing a dedicated reflective member. This makes it possible to efficiently reflect the light emitted from the LEDs 15a, thereby enhancing the backlight brightness.

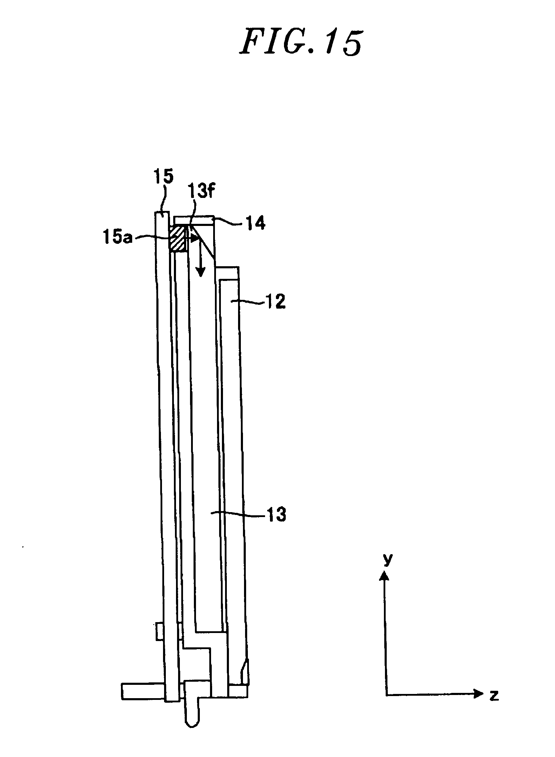

As shown in Fig. 15, the lights emitted from the LEDs 15a may be incident on the light incident surface 13f of the light guide plate 13 along the direction in which the LEDs 15a are arranged and mounted on the substrate 15. In this case, the LEDs 15a are kept in close contact with the light incident surface 13f of the light guide plate 13. Fig. 15 is a section view showing one example of the combination of the liquid crystal panel 12, the light guide plate 13, the frame 14 and the substrate 15. Only one of the LEDs 15a is representatively illustrated in Fig. 15. With this configuration, it is possible to save the material of the light guide plate 13, thereby shortening the distance between the light guide plate 13 and the substrate 15 and reducing the thickness of the display device 1.

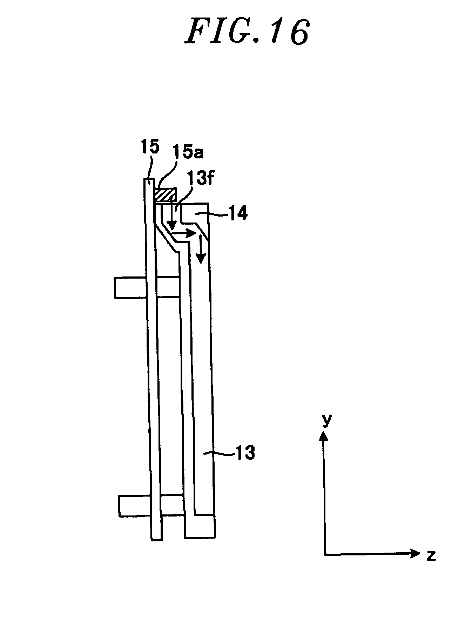

As shown in Fig. 16, the lights emitted from the LEDs 15a may be incident on the light incident surface 13f of the light guide plate 13 along the direction (toward the y-direction negative side). In this case, the LEDs 15a are oriented so that the optical axes thereof can extend in the direction parallel to the plane of the substrate 15. Fig. 16 is a section view showing another example of the combination of the liquid crystal panel 12, the light guide plate 13, the frame 14 and the substrate 15. Only one of the LEDs 15a is representatively illustrated in Fig. 16. Since the light source is oriented so that the optical axis thereof can extend in the direction parallel to the plane of the substrate 15, there is no need to form the light guide plate 13 into an I-like shape or an L-like shape. Furthermore, the light can be guided by the light guide plate 13 even if the LEDs 15a emit the light in the direction parallel to the plane of the substrate 15.

While the above embodiments of the present invention have been described with reference to the accompanying drawings, it goes without saying that the display device of the present invention is not limited to these embodiments. It will be apparent to those skilled in the art that many changes or modifications may be made without departing from the scope of the invention defined in the claims. It should be understood that such changes or modifications may well fall within the technical scope of the invention.

For example, the LEDs as a light source are not limited to LEDs emitting single color light (e.g., red light). Two or three kinds of LEDs selected from red LEDs, green LEDs and blue LEDs may be alternately arranged. No particular restriction is imposed on the number of LEDs as a light source, the kind of emitted light colors and the number of emitted light colors.

While the invention has been shown and described with respect to the embodiments, it will be understood by those skilled in the art that various changes and modification may be made without departing from the scope of the invention as defined in the following claims.

## Claims

1. A backlight unit arranged at the rear side of a liquid crystal panel for illuminating the liquid crystal panel, comprising:
a light source for emitting light;
a light guide plate including a light incident surface on which the light emitted from the light source is incident, a main reflection surface for internally reflecting the light incident on the light incident surface and a light launching surface from which the light reflected by the main reflection surface is launched toward the liquid crystal panel;
a frame for supporting the light guide plate; and
a substrate arranged at the opposite side of the frame from the liquid crystal panel and mounted with electronic parts, the light source being mounted to the substrate.

2. The backlight unit of claim 1, wherein the light source is oriented so that the optical axis thereof extends in the thickness direction of the substrate, the light guide plate including an auxiliary reflection surface for reflecting the light incident on the light incident surface toward the main reflection surface.

3. The backlight unit of claim 2, further comprising a reflection member provided outside the main reflection surface.

4. The backlight unit of claim 2 or 3, wherein the frame includes a covering portion for covering the main reflection surface, the covering portion provided with a frame reflection layer serving as a covering surface for reflecting the light toward the main reflection surface.

5. The backlight unit of any one of claims 1 through 4, wherein the frame is arranged to support the liquid crystal panel.

6. The backlight unit of any one of claims 1 through 5, wherein the frame includes a surrounding member arranged between the substrate and the frame to surround the light source, the surrounding member having a transmission hole for passing the light emitted from the light source.

7. The backlight unit of any one of claims 1 through 5, wherein the frame includes a surrounding portion for surrounding the light source, the surrounding portion having a transmission hole for passing the light emitted from the light source.

8. The backlight unit of any one of claims 1 through 7, wherein the substrate includes a substrate reflection layer provided around the light source.

9. The backlight unit of any one of claims 1 through 8, wherein the light source is kept in close contact with the light incident surface.

10. The backlight unit of claim 1, wherein the light source is oriented so that the optical axis thereof extends in the direction parallel to the plane of the substrate.

11. A display device comprising the backlight unit of any one of claims 1 through 10.
